# EUROPÄISCHE PATENTANMELDUNG

(11) **EP 0 611 819 A2**
(43) Veröffentlichungstag der Anmeldung: **24.08.1994**
(21) Anmeldenummer: 94101307.0
(22) Anmeldetag: 28.01.1994
(51) Int. Cl.: C12C 9/02, C12C 13/02

(54) **Verfahren zum diskontinuierlichen Maische- und Würzekochen bei der Biererzeugung**

(30) Priorität: 18.02.1993 DE 4304975
(71) Anmelder: Lenz, Bernhard, D-97318 Kitzingen (DE); Lenz, August, D-97318 Kitzingen (DE)
(72) Erfinder: Lenz, Bernhard, D-97318 Kitzingen (DE); Lenz, August, D-97318 Kitzingen (DE)
(74) Vertreter: Böck, Bernhard, Dipl.-Ing.

(57) **Zusammenfassung**

Um den Primärenergiebedarf und die Umweltbelastung bei der Biererzeugung im Sudhaus weiter zu verringern, wird ein Verfahren zum diskontinuierlichen Maische- und Würzekochen vorgeschlagen. Dabei wird Warmwasser von ca. 80^{o} C, das z.B. beim Abkühlen der gekochten Würze mittels Kaltwasser im Plattenkühler erzeugt werden kann, in einem ersten Wärmetauschprozeß durch die Energie des beim Würzekochen erzeugten Schwadens auf ca. 99^{o} C aufgeheizt und zwischengespeichert. In einem zweiten Wärmetauschprozeß wird die geläuterte Würze vor dem Kochen durch das 99^{o} C aufweisende Heißwasser aus dem Heißwasserspeicher (30) aufgeheizt. Das dabei auf ca. 80^{o} C abgekühlte Warmwasser wird wieder zurück in den ersten Wärmetauschprozeß geführt, wo es durch die Schwadenenergie erneut auf ca. 99^{o} C aufgeheizt wird. Gleichzeitig oder zeitlich versetzt zum zweiten Wärmetauschprozeß wird ein dritter Wärmetauschprozeß durchgeführt, bei dem durch das Heißwasser von ca. 99^{o} C aus dem Heißwasserspeicher (30) Heizenergie dem Maischprozeß zugeführt wird. Das dabei auf ca. 80^{o} C abgekühlte Warmwasser wird gleichfalls im ersten Wärmetauschprozeß wieder durch die Schwadenenergie aufgeheizt.

## Beschreibung

Die Erfindung bezieht sich auf ein Verfahren zum diskontinuierlichen Maische- und Würzekochen bei der Biererzeugung, bei dem die geläuterte Würze drucklos oder unter geringem Druck gekocht wird und bei dem ferner Warmwasser in einem ersten Wärmetauschprozeß durch die Energie des beim Würzekochen erzeugten Schwadens weiter aufgeheizt und vor seiner Verwendung in einem zweiten Wärmetauschprozeß in einem Heißwasserspeicher gesammelt wird, wobei in dem zweiten Wärmetauschprozeß die geläuterte Würze vor dem Kochen durch das Heißwasser aus dem Heißwasserspeicher weiter aufgeheizt wird und das im zweiten Wärmetauschprozeß abgekühlte Warmwasser wieder im ersten Wärmetauschprozeß durch die Schwadenenergie aufgeheizt wird usw..

Durch die Monatsschrift für Brauerei 34. Jahrgang vom 27.11.1981, Nr. 11 ist es beim diskontinuierlichen Würzekochen bekannt, die Energie des beim Kochen erzeugten Schwadens in einem Wärmetauscher für die Erzeugung von Warmwasser für die verschiedensten Zwecke im Sudhaus zu nutzen, u.a. für die Flaschenreinigungsmaschine im Flaschenkeller und zum Vorheizen der geläuterten Würze vor dem Kochen. Da jedoch beim Betrieb dieses Wärmetauschers (Pfannendunstkondensators) laufend Kaltwasser nachgespeist und aufgeheizt wird, wird in der Regel trotz des an sich relativ hohen Warmwasserverbrauchs in einer Brauerei überschüssiges Warmwasser produziert, was zu Lasten des Primärenergieeinsatzes als auch Wasserverbrauchs geht.

Ein in energiewirtschaftlicher Hinsicht verbessertes Verfahren zum diskontinuierlichen Würzekochen bei der Biererzeugung ist durch die DE-3 147 620 oder EP-0080 706 bekannt. Bei diesem Verfahren kann die beim Würzekochen anfallende Schwadenenergie wahlweise entweder ganz unmittelbar wieder dem Würzekochprozeß zugeführt werden oder es kann auch im Bedarfsfall durch diese Schwadenenergie aufgeheiztes Wasser zusätzlich für andere Zwecke im Sudhaus abgezogen werden. In jedem Fall wird eine Einsparung an Primärenergie erreicht und die Produktion von heißem Überschußwasser vermieden oder verringert. In dem zuletzt genannten Fall (verringerte Produktion von heißem überschußwasser) besteht aber bereits das Problem der Koordinierung der verschiedenen Verbraucher von aufgeheiztem Wasser in der Brauerei.

Der Erfindung liegt die Aufgabe zugrunde, das obige Problem zu vermeiden und einerseits möglichst viel beim Würzekochen erzeugte Schwadenenergie zu speichern, andererseits aber keinen überschuß an heißem Wasser zu produzieren, sondern die beim Würzekochen evtl. anfallende überschüssige Schwadenenergie, welche nicht direkt dem Würzekochprozeß wieder zugeführt werden kann dem Sudprozeß zuzuführen, um auch eine verringerte Wärmeabgabe an die Umwelt und eine weitere Einsparung sowohl an Primärenergie als auch an Wasser zu erreichen.

Gemäß der Erfindung wird obige Aufgabe dadurch gelöst, daß gleichzeitig oder zeitlich versetzt zu dem zweiten Wärmetauschprozeß ein dritter Wärmetauschprozeß durchgeführt wird, bei dem durch das Heißwasser aus dem Heißwasserspeicher Heizenergie dem Maischprozeß zugeführt wird, wobei das beim Maischprozeß abgekühlte Warmwasser wieder im ersten Wärmetauschprozeß durch die Schwadenenergie aufgeheizt wird usw..

Während bisher der Maischprozeß und das Würzekochen im Sudbetrieb bei getrennter Heizenergiezufuhr erfolgte, wird erfindungsgemäß die beim Würzekochen anfallende Schwadenenergie, welche nicht vollständig zum Aufheizen der geläuterten Würze vor dem Kochen verwertet werden kann, als Heizenergie dem Maischprozeß zugeführt. Dadurch ist sichergestellt, daß im ersten Wärmetauschprozeß durch die Energie des beim Würzekochen erzeugten Schwadens im Idealfall kein überschüssiges Heißwasser erzeugt wird, während gleichzeitig eine Einsparung an Heizenergie beim Maischprozeß erreicht wird. Insgesamt betrachtet ergibt sich dadurch eine weitere Minderung des Primärenergiebedarfs beim Sudprozeß in Brauereien und somit auch eine Schonung der Umwelt. Weitere Vorteile der Erfindung bestehen darin, daß die Würze auch drucklos gekocht und bei der Durchführung des erfindungsgemäßen Verfahrens auch mit einer konstanten umlaufenden Wassermenge mit Zusatzheizeffekt beim Maischprozeß gearbeitet werden kann. Dabei umfaßt der Maischprozeß das Aufheizen und/oder Kochen der Maische. Zur Ausführung des erfindungsgemäßen Verfahrens können in das Maischgefäß z.B. einfache plattenförmige Hohlkörper als Wärmetauscher eingebaut werden.

Ausgestaltungen der Erfindung gehen aus den Unteransprüchen hervor. So wird vorzugsweise das im dritten Wärmetauschprozeß beim Maischprozeß abgekühlte Warmwasser gemeinsam mit dem im zweiten Wärmetauchprozeß bei der Würzeaufheizung abgekühlten Warmwasser wieder im ersten Wärmetauschprozeß durch die Schwadenenergie aufgeheizt. Diese Maßnahme verbessert weiter die Wirtschaftlichkeit des erfindungsgemäßen Verfahrens.

Wenn nach einer weiteren Ausgestaltung der Erfindung die Energie des beim Maischprozeß erzeugten Schwadens zusammen mit der Energie des beim Würzekochen erzeugten Schwadens zur weiteren Aufheizung des Warmwassers im ersten Wärmetauschprozeß verwendet wird, wird der Energiehaushalt beim Sudprozeß weiter verbessert bzw. der Primärenergiebedarf für den Sudprozeß noch mehr verringert.

Nach noch einer weiteren Ausgestaltung der Erfindung können die beim Maischprozeß erzeugten Schwaden vor ihrer Ableitung in die Atmosphäre durch einen Schwadenwäscher geführt werden. Dadurch können vorteilhaft störende Gerüche, ausgehend von den ins Freie abgeleiteten Schwaden, vermieden werden, was weitere Umweltschonung bedeutet.

An dieser Stelle sei noch einmal darauf hingewiesen, daß durch die verschiedenen mittels der Erfindung erzielbaren Energieeinsparungen bzw. verbesserte Energienutzung insgesamt ein umweltfreulicherer Betrieb eines Sudhauses zur Biererzeugung erreicht wird.

Die Erfindung wird anschließend anhand der Zeichnungen von Ausführungsbeispielen erläutert, die schematisch und stark vereinfacht drei verschiedene Anlagen zur Durchführung des erfindungsgemäßen Verfahrens zeigen.

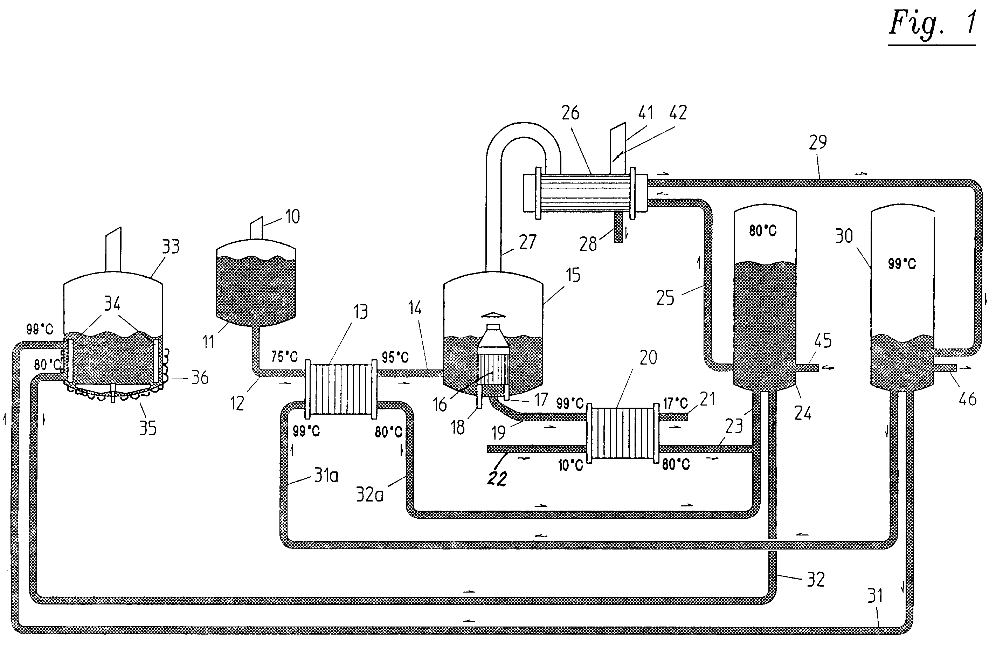

Zunächst wird in Verbindung mit Figur 1 der Teil eines Sudhauses beschrieben, welcher für das Würzekochen bei der Biererzeugung vorgesehen ist. Die für das Würzekochen bestimmte, geläuterte Würze wird von dem nicht gezeigten Läuterbottich über eine Rohrleitung 10 in ein Vorlaufgefäß 11 eingeführt. Die Würze hat in diesem Vorlaufgefäß 11 eine Temperatur von ca. 75^{o} C. Aus diesem Vorlaufgefäß 11 wird jeweils eine zum Kochen bestimmte Würzepartie über die Rohrleitung 12, einen Wärmetauscher 13 und die Rohrleitung 14 in eine Würzepfanne 15 eingespeist. In die Würzepfanne 15 ist beispielsweise ein Innenkocher 16 eingebaut, mittels dessen die Würze im Umlauf auf Kochtemperatur aufgeheizt wird. Der Innenkocher 16 könnte auch durch einen üblichen Außenkocher ersetzt werden. Dem Innenkocher 16 wird über eine Rohrleitung 17 Heizenergie, z.B. Heißdampf zugeführt und über eine Rohrleitung 18 abgeführt. Die Würzekochung kann drucklos oder unter geringem Druck z.B. bis ca. 1 bar erfolgen. Nach Beendigung des Kochvorgangs wird die heiße Würze mit einer Temperatur von ca. 99^{o} C über die Rohrleitung 19 in einen Wärmetauscher 20 (sog. Plattenkühler) eingeführt, den sie durch die Rohrleitung 21 als sog. Kaltwürze mit einer Temperatur von ca. 17^{o} C zur weiteren Verwendung bei der Biererzeugung verläßt. Die Abkühlung der heißen Würze im Wärmetauscher 20 erfolgt durch über die Rohrleitung 22 in den Wärmetauscher 20 eingeführtes Kaltwasser mit einer Temperatur von ca. 10^{o} C, welches im Wärmetauscher 20 durch die heiße Würze auf etwa 80^{o} C erwärmt wird. Im folgenden wird dieses auf etwa 80^{o} C erwärmte Wasser als Warmwasser bezeichnet. Zum Anfahren des erfindungsgemäßen Systems wird nun beispielsweise dieses Warmwasser von ca. 80^{o} C über eine Rohrleitung 23 in einen Warmwasserspeicher 24 eingeführt. An dieser Stelle wird betont, daß das Warmwasser von ca. 80^{o} C auch auf anderem Weg auf diese Temperatur gebracht werden kann. Eine solche Möglichkeit wird beispielhaft noch erläutert.

Während eines Würzekochprozesses, bei dem die Rohrleitungen 19, 22, 23 gesperrt sind, wird Warmwasser von ca. 80^{o} C aus dem Warmwasserspeicher 24 über eine Rohrleitung 25 in einen Wärmetauscher 26 (sog. Pfannendunstkondensator) eingespeist, in dem es durch die Heizenergie der beim Würzekochen erzeugten Schwaden auf ca. 99^{o} C aufgeheizt wird (1. Wärmetauschprozeß). Zu diesem Zweck ist der Wärmetauscher 26 über eine Rohrleitung 27 mit dem oberen Teil des Innenraums der Würzepfanne 15 verbunden. Die beim Würzekochen erzeugten Schwaden werden von der Würzepfanne 15 über die Rohrleitung 27 in den Wärmetauscher 26 eingeführt, aus dem das während des Wärmetauschprozesses anfallende Kondensat über die Rohrleitung 28 abgeführt wird. Die beim Wärmetauschprozeß anfallenden Restschwaden entweichen durch ein Schwaden-Abzugsrohr 41 in die Atmosphäre. Ein in das Abzugsrohr 41 eingebautes Klappenventil 42 ermöglicht die wahlweise Einstellung eines geringen Druckes bis z.B. ca. 1 bar beim Würzekochen. Das Klappenventil 42 dient somit der Druckregulierung beim Würzekochprozeß. In vollständig geöffneter Einstellage des Klappenventils 42 wird drucklos gekocht.

Das durch die Schwadenenergie im Wärmetauscher 26 erzeugte Heißwasser von ca. 99^{o} C wird über eine Rohrleitung 29 in einen Heißwasserspeicher 30 eingespeist, indem es zunächst gesammelt wird.

Wenn nach Beendigung des Würzekochens der Inhalt der Würzepfanne 15 über die Rohrleitung 19 und den Wärmetauscher 20 bei 21 als Kaltwürze abgeführt ist, wie vorstehend erläutert wurde, und eine neue Partie geläuterter Würze aus dem Vorlaufgefäß 11 in die Würzepfanne 15 eingeführt wird, wird der Wärmetauscher 13 aktiviert (2. Wärmetauschprozeß). Die aus dem Vorlaufgefäß 11 in die Rohrleitung 12 einströmende Würze hat eine Temperatur von ca. 75^{o} C und wird im Wärmetauscher 13 auf ca. 95^{o} C weiter aufgeheizt, um mit dieser Temperatur durch die Rohrleitung 14 in die Würzepfanne 15 einzutreten. Zum Aufheizen dieser Würze auf Kochtemperatur benötigt daher der Innenkocher 16 weniger Primärenergie.

Die Aufheizung der geläuterten Würze im Wärmetauscher 13 erfolgt mittels des im Heißwasserspeicher 30 befindlichen Heißwassers von ca. 99^{o} C, das während dieser Arbeitsphase über eine Rohrleitung 31 a in den Wärmetauscher 13 eingespeist wird, dort auf ca. 80^{o} C abgekühlt wird und den Wärmetauscher 13 mit dieser Temperatur über eine Rohrleitung 32 a verläßt, die über ein Teil der Leitung 23 zurück in den Warmwasserspeicher 24 geführt ist. Das Warmwasser von ca. 80^{o} C aus dem Wärmetauscher 13 wird folglich über die Rohrleitung 32 a und einen Teil der Leitung 23 in den Warmwasserspeicher 24 zurückgefördert.

Vom Heißwasserspeicher 30 führt eine weitere Rohrleitung 31 zu einem Wärmetauscher 34, welcher beispielsweise in Form eines oder mehrerer Plattenwärmetauscher in ein Maischgefäß 33 eingebaut ist. Über die Rohrleitung 31 tritt Heißwasser von ca. 99^{o} C in den Wärmetauscher 34 ein und verläßt diesen als Warmwasser mit einer Temperatur von ca. 80^{o} C über eine Rohrleitung 32, die zum Warmwasserspeicher 24 zurückgeführt ist. Über diese Rohrleitung 32 strömt also das Warmwasser dann zurück in den Warmwasserspeicher 24. Beim nächstfolgenden Würzekochprozeß wird dann wieder Warmwasser mit einer Temperatur von ca. 80^{o} C aus dem Warmwasserspeicher 24 über die Rohrleitung 25 in den Wärmetauscher 26 eingespeist und der oben beschriebene Prozeß wiederholt sich.

Das Warmwasser mit einer Temperatur von 80^{o} C im Warmwasserspeicher 24 kann auch auf andere Weise als durch den Wärmetauscher 20 erzeugt werden, wie bereits vorstehend angedeutet wurde. Z.B. kann Kaltwasser von ca. 10^{o} C bei 45 in den Warmwasserspeicher 24 eingespeist werden und dieses Kaltwasser kann dann über die Rohrleitung 25 zum Wärmetauscher 26 gefördert werden, indem es dann im Kreislauf über die Rohrleitung 29, dem Heißwasserspeicher 30, weiter beispielsweise über die Rohrleitung 31 a, den Wärmetauscher 13 und die Rohrleitung 32 a allmählich auf die Temperatur von ca. 80^{o} C aufgeheizt wird. Es ist auch möglich, aus dem Heißwasserspeicher 30 bei 46 Heißwasser für externe Verbraucher abzuziehen. In diesem Fall ist eine zusätzliche Einspeisung von Wasser in einer entsprechenden Menge in den Warmwasserspeicher 24 erforderlich, was auch automatisch erfolgen kann.

Die vom Wärmetauscher 34 in einem dritten Wärmetauschprozeß bewirkte Aufheizung der im Maischgefäß 33 befindlichen Maische ergänzt deren Aufheizung durch die üblichen Außenheizsysteme 35 und 36, deren Rohre am Boden bzw. Mantel in der unteren Hälfte des Maischgefäßes 33 angeordnet sind. Diese Außenheizsysteme werden mit Heißdampf oder Heißwasser beschickt und der zur Erzeugung des Heißdampfes oder Heißwassers erforderliche Primärenergieeinsatz wird durch die oben beschriebene erfindungsgemäße Zusatzheizung entsprechend reduziert. Mit anderen Worten, mit Hilfe des erfindungsgemäßen Verfahrens wird ein Energieeinspareffekt an zwei Stellen der Sudanlage erreicht, nämlich beim Innenkocher 16 in der Würzepfanne 15 und bei den Außenheizsystemen 35 und 36 am Maischgefäß 33. Der dritte Wärmetauschprozeß im Wärmetauscher 34 kann gleichzeitig oder zeitlich versetzt zum zweiten Wärmetauschprozeß im Wärmetauscher 13 durchgeführt werden.

In der Würzepfanne 15 kann zur Vermeidung einer Warmwasserüberproduktion unter einem vorbestimmten geringen Druck von ca. 1 bar gekocht werden, was bedeutet, daß das System auch mit einer konstanten umlaufenden Wassermenge arbeiten kann. Schwankungen bei der in der Würzepfanne 15 erzeugten Schwadenenergie können vorteilhaft durch den Wärmetauscher 34 im Maischgefäß 33 aufgefangen werden, denn je größer dessen Heizleistung ist, desto geringer ist die Anforderung an die Heizleistung der Außenheizsysteme 35 und 36.

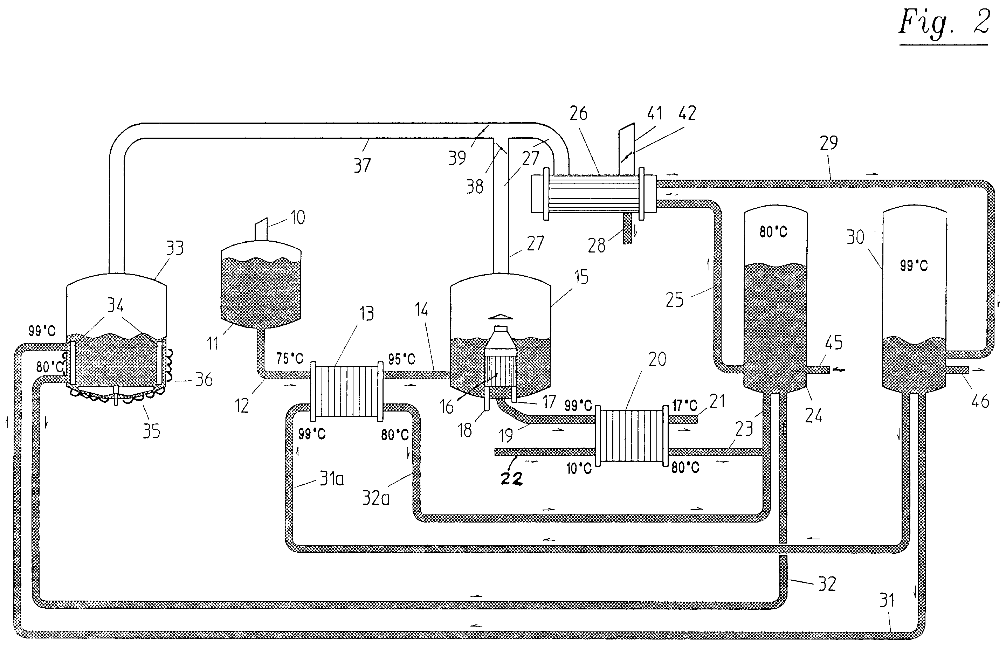

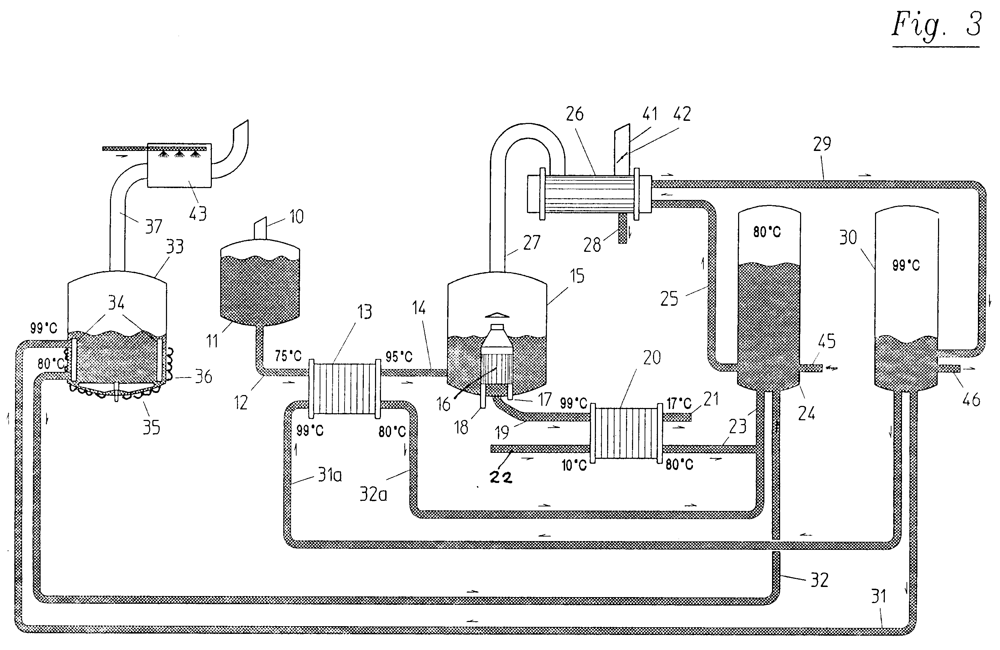

Die in den Figuren 2 und 3 gezeigten Ausführungsbeispiele entsprechen, soweit das Würzekochen und der Maischprozeß betroffen sind, dem Ausführugnsbeispiel nach Figur 1, d.h., daß auch bei diesen Ausführugnsformen gleichzeitig oder zeitlich versetzt zu dem zweiten Wärmetauschprozeß im Wärmetauscher 13 ein dritter Wärmetauschprozeß im Wärmetauscher 34 durchgeführt wird. Gleiche Anlageteile sind daher mit den gleichen Bezugszahlen gekennzeichnet. Jedoch wird bei der Ausführungsform der Anlage nach Figur 2 die Energie der beim Maischekochen erzeugten Schwaden zusammen mit der Energie der beim Würzekochen erzeugten Schwaden zur weiteren Aufheizung des Warmwassers von ca. 80^{o} C im ersten Wärmetauschprozeß (Wärmetauscher 26) genutzt. Zu diesem Zweck ist eine Rohrleitung 37 an einem Ende mit dem Innenraum des Maischgefäßes 33 und mit dem anderen Ende z.B. mit der Rohrleitung 27 verbunden, die von der Würzepfanne 15 zum Wärmetauscher 26 (Pfannendunstkondensator) geführt ist. Dadurch können die beim Maischekochen erzeugten Schwaden gleichfalls in den Wärmetauscher 26 geleitet werden, um dort das Warmwasser von ca. 80^{o} C aus dem Warmwasserspeicher 24 auf eine Temperatur von ca. 99^{o} C aufzuheizen. In den Rohrleitungen 27 bzw. 37 eingebaute Klappenventile 38 bzw. 39 ermöglichen eine Zuführung der Schwaden nur aus der Würzepfanne 15 oder nur aus dem Maischgefäß 33 zum Wärmetauscher 26. Die oben beschriebene Verfahrensführung liefert im übrigen einen Beitrag zum Umweltschutz, was auch für das folgende Ausführungsbeispiel gilt, denn es werden sowohl weniger Wärme ungenutzt in die Atmosphäre abgegeben, als auch ggf. störende Geruchsemissionen unterbunden.

Beim Ausführungsbeispiel nach Fig. 3 ist in die Rohrleitung 37, welche der Ableitung der beim Maischprozeß im Maischgefäß 33 erzeugten Schwaden in die Atmosphäre dient, ein "Schwadenwäscher" 43 eingebaut. Der "Schwadenwäscher" 43 hat die Funktion, störende Geruchsstoffe aus den abziehenden Schwaden auszuwaschen. Ein solcher "Schwadenwäscher" kann auch bei den Ausführungsbeispielen nach Figur 1 und 2 vorgesehen werden. Der "Schwadenwäscher" 43 arbeitet in gleicher Weise wie die bekannten Gaswäscher.

Es wird noch bemerkt, daß in den Zeichnungen die zahlreichen erforderlichen Schieber, Ventile und Pumpen der übersichtlichkeit wegen nicht gezeigt sind. Ferner sind die bei der Beschreibung der Ausführungsbeispiele gemachten Temperaturangaben nur beispielhaft zu betrachten. Diese Temperaturen können bei der Ausführung des erfindungsgemäßen Verfahrens betriebsbedingt nach oben und unten variieren. Desweiteres können die beiden Wasserspeicher 24 und 30(für Warmwasser von 80^{o} C und Heißwasser von 99^{o} C) in einem sog. Schichtenspeicher zusammengefasst werden.

## Patentansprüche

1. Verfahren zum diskontinuierlichen Maische- und Würzekochen bei der Biererzeugung, bei dem die geläuterte Würze drucklos oder unter geringem Druck gekocht wird und bei dem ferner Warmwasser in einem ersten Wärmetauschprozeß (Wärmetauscher 26) durch die Energie des beim Würzekochen erzeugten Schwadens weiter aufgeheizt und vor seiner Verwendung in einem zweiten Wärmetauschprozeß in einem Heißwasserspeicher (30) gesammelt wird, wobei in dem zweiten Wärmetauschprozeß (Wärmetauscher 13) die geläuterte Würze vor dem Kochen durch das Heißwasser aus dem Heißwasserspeicher (30) weiter aufgeheizt wird und das im zweiten Wärmetauschprozeß abgekühlte Warmwasser wieder im ersten Wärmetauschprozeß durch die Schwadenenergie aufgeheizt wird usw., dadurch gekennzeichnet, daß gleichzeitig oder zeitlich versetzt zu dem zweiten Wärmetauschprozeß (Wärmetauscher 13) ein dritter Wärmetauschprozeß (Wärmetauscher 34) durchgeführt wird, bei dem durch das Heißwasser aus dem Heißwasserspeicher (30) Heizenergie dem Maischprozeß zugeführt wird, wobei das beim Maischprozeß abgekühlte Warmwasser wieder im ersten Wärmetauschprozeß (Wärmetauscher 26) durch die Schwadenenergie aufgeheizt wird usw..

2. Verfahren nach Anspruch 1, dadurch gekennzeichnet, daß das im dritten Wärmetauschprozeß (Wärmetauscher 34) beim Maischprozeß abgekühlte Warmwasser gemeinsam mit dem im zweiten Wärmetauschprozeß (Wärmetauscher 13) bei der Würzeaufheizung abgekühlten Warmwasser wieder im ersten Wärmetauschprozeß (Wärmetauscher 26) durch die Schwadenenergie aufgeheizt wird.

3. Verfahren nach Anspruch 1, dadurch gekennzeichnet, daß die Energie des beim Maischeprozeß erzeugten Schwadens zusammen mit der Energie des beim Würzekochen erzeugten Schwadens zur weiteren Aufheizung des Warmwassers im ersten Wärmetauschprozeß (Wärmetauscher 26) verwendet wird.

4. Verfahren nach einem der Ansprüche 1 - 3, dadurch gekennzeichnet, daß die beim Maischprozeß erzeugten Schwaden vor ihrer Ableitung in die Atmosphäre durch einen Schwadenwäscher (43) geführt werden.
